# EUROPÄISCHE PATENTSCHRIFT

(11) **EP 0 277 649 B1**
(45) Veröffentlichungstag und Bekanntmachung des Hinweises auf die Patenterteilung: **21.04.1993**
(21) Anmeldenummer: 88101546.5
(22) Anmeldetag: 03.02.1988
(51) Int. Cl.: B62D 7/14, B60G 3/20

(54) **Radaufhängung für lenkbare Hinterräder von mit Vorderradlenkung ausgestatteten Kraftfahrzeugen, insbesondere Personenkraftwagen**
Wheel suspension for the steerable rear wheels of motor vehicles equipped with front wheel steering, especially passenger cars
Suspension pour roues arrière dirigeables de véhicules à moteur équipés d'une direction des roues avant, en particulier voitures

(30) Priorität: 03.02.1987 DE 3703196
(43) Veröffentlichungstag der Anmeldung: 10.08.1988
(73) Patentinhaber: Bayerische Motoren Werke Aktiengesellschaft, 80788 München (DE)
(72) Erfinder: Müller, Rudolf, Dipl.-Ing., D-8060 Dachau (DE); Strasser, Ludwig, Ing.grad., D-8017 Ebersberg (DE)
(74) Vertreter: Draeger, Karlfried

(56) Entgegenhaltungen:
- DE-A- 3 609 656
- DE-A- 3 623 885
- FR-A- 2 552 374

## Beschreibung

Die Erfindung betrifft eine Radaufhängung für lenkbare Hinterräder von mit Vorderradlenkung ausgestatteten Kraftfahrzeugen, insbesondere Personenkraftwagen, nach dem Oberbegriff des Patentanspruchs 1.

Bei einer bekannten Radaufhängung dieser Art für Fahrzeuge mit Hinterradantrieb (DE-A-36 23 885) greifen an jedem Hinterrad-Radträger ein Längslenker und zwei zumindest annähernd parallel zueinander und mit Abstand voneinander übereinander angeordnete Querlenker an. Die Gelenke, über welche die beiden Querlenker mit ihren äußeren Enden mit dem Radträger verbunden sind, definieren die Lenkdrehachse, die nach vorne zu ansteigt. Die inneren Enden der beiden Querlenker und das vordere Ende des Längslenkers sind an einem Fahrschemel befestigt. Das hintere Ende des Längslenkers ist mit dem Hinterrad-Radträger starr verbunden. Der vordere Bereich des Längslenkers ist mit Hilfe eines als Hydrozylinder ausgebildeten Stellmotors in Fahrzeugquerrichtung verschiebbar. Ein Lenkeinschlag eines Hinterrades wird durch Verschwenken des Längslenkers um die Lenkdrehachse bewirkt. Die Neigung der Lenkdrehachse ruft dabei eine Verlagerung des Hinterrades hervor, die dem Aufbau einer Seitenkraft in Richtung des gewünschten seitlichen Fahrzeugversatzes entgegenwirkt.

Bei einer anderen bekannten Radaufhängung für lenkbare Hinterräder von Fahrzeugen mit Vorderradlenkung und Vorderradantrieb sind an jedem Hinterrad-Radträger ein Federbein und zwei parallel zueinander und mit Abstand voneinander hintereinander angeordnete Querlenker vorhanden, von denen der vordere mit seinem äußeren Ende am unteren Ende des Federbeins und mit seinem inneren Ende an der Fahrzeugkarosserie angelenkt ist, während der hintere mit seinem äußeren Ende über einen Lenkhebel ebenfalls mit dem unteren Ende des Federbeins und mit seinem inneren Ende mit einer hydraulisch oder elektromotorisch betätigbaren Schubstange verbunden ist (DE-A-35 07 098). Mit dieser bekannten Radaufhängung ergibt sich bei einem Lenkeinschlag eine Hinterrad-Schrägstellung. Der Einstellung des Schräglaufwinkels folgt der Aufbau einer Seitenkraft zeitlich nach, die ihre dem Schräglaufwinkel entsprechende Größe erst eine gewisse Zeitspanne nach dem Einleiten des Lenkvorganges erreicht. Bei den verhältnismäßig kleinen Einschlagwinkeln, die bei Hinterradlenkungen gerade bei höheren Fahrgeschwindigkeiten anzutreffen sind, bei denen die Seitenkraft schnell vorhanden sein sollte, benötigt der für das seitliche Versetzen des Fahrzeugs gewünschte Seitenkraftaufbau erhebliche Zeit.

Bei einer weiteren bekannten Radaufhängung für lenkbare Hinterräder von Fahrzeugen mit Vorderradlenkung sind an jedem Hinterrad-Radträger ein Federbein und zwei parallel zueinander und mit Abstand voneinander hintereinander angeordnete Querlenker vorhanden, die jeweils mit ihrem äußeren Ende an dem Radträger und mit ihrem inneren Ende an dem Fahrzeugaufbau angelenkt sind und von denen der hintere in seiner Länge nicht veränderbar, der vordere hingegen mittels einer in ihn integrierten hydraulischen Teleskopeinheit zum Lenken in seiner Länge veränderbar ist (JP-A-60-92977). Auch mit dieser bekannten Radaufhängung ergibt sich bei einem Lenkeinschlag eine Hinterrad-Schrägstellung, der der Aufbau einer Seitenkraft zeitlich nachfolgt.

Es ist auch eine Radaufhängung für lenkbare Hinterräder von mit Vorderradlenkung ausgestatteten Kraftfahrzeugen bekannt (DE-A-36 09 656), bei welcher der Hinterrad-Radträger durch einen Längslenker und einen Schräglenker geführt ist. Der Schräglenker, an dem sich ein Federbein abstützt, ist mit seinem aufbauseitigen Ende an einer rohrförmigen Quertraverse befestigt, die über elastische Lager an dem Fahrzeugaufbau befestigt ist. In der rohrförmigen Quertraverse ist eine Zahnstange in Fahrzeugquerrichtung verschiebbar gelagert, die an ihrem aus der rohrförmigen Quertraverse ragenden Ende mit dem vorderen Ende des Längslenkers verbunden ist. An ihren radseitigen Enden sind der Längslenker und der Schräglenker durch einen hinter der Radmitte angeordneten Gelenkzapfen schwenkbar miteinander verbunden. Die Achse dieses Gelenkzapfens, welche die Lenkdrehachse bildet, ist nach hinten zu ansteigend geneigt angeordnet. Das Lenken des Hinterrades wird dadurch bewirkt, daß die Zahnstange in Fahrzeugquerrichtung verschoben und dadurch der Längslenker um den Gelenkzapfen geschwenkt wird.

Ferner ist es z.B. aus Bussien, Automobiltechnisches Handbuch, Ergänzungsband zur 18. Auflage, 1979, Seiten 610, 611, Abschnitt "Nachlauf", bekannt, bei einer Radaufhängung die Lenkdrehachse eines lenkbaren Rades, für das ein Nachlauf vorgesehen ist, so daß die Seitenkräfte ein geschwindigkeitsabhängiges Rückstellmoment bewirken, derart anzuordnen, daß sie nach hinten zu ansteigt, und sich daher bei Kurvenfahrt der Radsturz an dem kurvenäußeren Rad in negativer Richtung ändert, wodurch die Seitenführung verbessert wird.

Der Erfindung liegt die Aufgabe zugrunde, eine Radaufhängung der eingangs genannten Art zu schaffen, bei der mit einfachen Mitteln ein rascher Aufbau von Seitenkraft für den gewünschten Seitenversatz des Fahrzeugs bei einem mit dem Lenkeinschlag der Vorderräder gleichsinnigen Lenkeinschlag der Hinterräder gewährleistet ist.

Die Lösung dieser Aufgabe ist im kennzeichnenden Teil des Patentanspruchs 1 angegeben. Durch sie wird bei kompaktem Aufbau erreicht, daß sich während des Fahrens, insbesondere bei höheren Geschwindigkeiten, bei gleichsinnigem Lenkeinschlag der Vorder- und der Hinterräder nicht nur eine Hinterrad-Schrägstellung, sondern auch eine Änderung des Radsturzes ergibt, die im Sinne einer Fahrzeugverlagerung zu der durch den Lenkeinschlag vorgegebenen Seite hin wirkt. Dies führt zu einem verhältnismäßig schnellen Aufbau von verlagerungsrichtig gerichteter Seitenkraft.

Der nach der Erfindung zu erzielende rasche Seitenkraftaufbau hat zur Folge, daß ein gewünschter Seitenversatz des Fahrzeugs schon mit verhältnismäßig kleinen Einschlagwinkeln zu erzielen ist. Die maximal einzustellenden Einschlagwinkel können daher klein sein. Dies führt zu einer geringen Bauraumbeanspruchung. Der Raum zwischen den Hinterrädern kann demgemäß weitgehend für andere Zwecke genutzt werden, z.B. als Kofferraum.

Wegen der nach hinten zu ansteigenden, also für die Vorwärtsfahrtrichtung um einen Nachlaufwinkel geneigt angeordneten Lenkdrehachse verändert sich bei gleichsinnigem Lenkeinschlag der Hinterräder der beiden Fahrzeugseiten aus der Geradeausstellung der Sturz des kurvenäußeren Hinterrades in negativer Richtung, d.h. der obere Radteil verlagert sich nach innen, und der Sturz des kurveninneren Hinterrades in positiver Richtung, d.h. der obere Radteil verlagert sich nach außen. Es ergeben sich demnach an den Hinterrädern beider Fahrzeugseiten gleichgerichtete Seitenverlagerungen und damit gleichgerichtete Seitenkräfte, die bei gleichsinnigem Lenkeinschlag der Vorder- und der Hinterräder in der Richtung wirken, in die das Fahrzeug durch das Lenken seitlich versetzt werden soll.

Die Lenkdrehachse kann in Seitenansicht durch die Radmitte verlaufen, aber auch mit Abstand von dieser angeordnet sein. Je nach Anordnung der Lenkdrehachse kann der Punkt, in dem die Lenkdrehachse die Radaufstandsfläche (Fahrbahn) durchstößt, vor oder hinter dem Radaufstandspunkt liegen oder mit diesem zusammenfallen. Um für die im allgemeinen überwiegende Vorwärtsfahrt günstige Fahrverhältnisse zu erhalten, ist es vorteilhaft, die Lenkdrehachse stets so anzuordnen, daß für die Vorwärtsfahrtrichtung ein Nachlauf des Hinterrades gegeben ist. Dieser bewirkt das Bestreben der Hinterräder, sich von selbst in Geradeausstellung einzustellen und diese einzuhalten. Außerdem wirkt er einer etwaigen Flatterneigung der Hinterräder entgegen. Die Größe der Nachlaufstrecke kann in bekannter Weise festgelegt werden.

Eine besonders günstige Ausbildung der Radaufhänung nach der Erfindung ist in dem Patentanspruch 3 angegben. Diese Ausbildung ist besonders kompakt und insbesondere auch für angetriebene Hinterräder vorteilhaft.

In der Zeichnung sind Ausführungsbeispiele der Erfindung schematisch dargestellt, und zwar zeigt
- Fig. 1: eine Radaufhängung in Schrägansicht von oben, links und hinten und
- Fig. 2: eine andere Radaufhängung ebenfalls in Schrägansicht von oben, links und hinten.

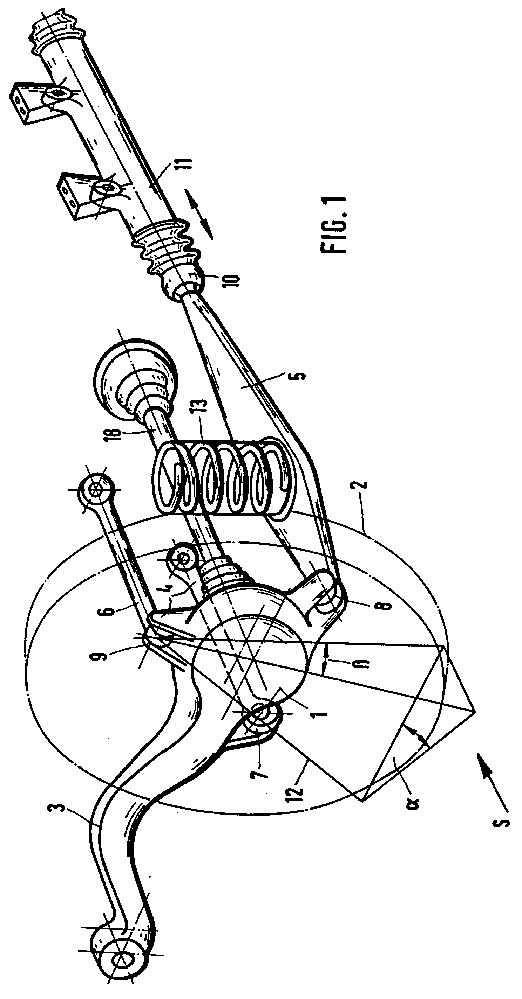

Nach Fig. 1 ist ein Radträger 1 für das linke Hinterrad 2 eines nicht weiter dargestellten Personenkraftwagens, der in üblicher Weise mit einer Vorderradlenkung ausgestattet ist, mit einem Längslenker 3 einstückig ausgebildet, der sich von dem Radträger 1 aus wenigstens annähernd in Fahrzeuglängsrichtung nach vorne erstreckt und an seinem vorderen Ende an dem Fahrzeugaufbau gelagert ist. Radträger 1 und Längslenker 3 bilden gemeinsam eine Längsschwinge.

An dem Radträger 1 greifen ein vorderer Querlenker 4, ein hinterer Querlenker 5 und ein oberer Querlenker 6, die sich jeweils wenigstens annähernd in Fahrzeugquerrichtung erstrecken, an. Die Querlenker 4, 5, 6 sind jeweils an ihren äußeren Enden über ein vorderes Gelenk 7 bzw. ein hinteres Gelenk 8 bzw. ein oberes Gelenk 9 mit dem Radträger 1 verbunden. In Seitenansicht bilden die drei Gelenke 7, 8, 9 die Ecken eines Dreiecks. Das vordere Gelenk 7 und das hintere Gelenk 8 befinden sich unterhalb und das obere Gelenk 9 befindet sich oberhalb der Radmitte. In lotrechter Projektion ist das obere Gelenk 9 zwischen dem vorderen Gelenk 7 und dem hinteren Gelenk 8 angeordnet.

An ihren inneren Enden sind der vordere Querlenker 4 und der obere Querlenker 6 an einem an dem Fahrzeugaufbau elastisch gelagerten Fahrschemel in ihrer Längsrichtung, also in Fahrzeugquerrichtung fixiert gelagert. Das innere Ende des hinteren Querlenkers 5 ist mit dem linken Ende einer Schubstange 10 eines Stellmotors 11 verbunden, der ebenfalls an dem Fahrschemel befestigt ist. Die Schubstange 10, die sich ebenso wie der hintere Querlenker 5 in Fahrzeugquerrichtung erstreckt, ist gemeinsam mit diesem in Fahrzeugquerrichtung verlagerbar.

Das vordere Gelenk 7 und das obere Gelenk 9 der beiden in Fahrzeugquerrichtung fixierten Querlenker 4, 6 definiereneine Lenkdrehachse 12, die nach hinten ansteigt und um welche der Radträger 1 gemeinsam mit dem Längslenker 3 mit Hilfe des hinteren Querlenkers 5 schwenkbar ist. Auf dem hinteren Querlenker 5 stützt sich die linke hintere Tragfeder 13 der den Fahrzeugaufbau tragenden Tragfedern ab. Die Abstützstelle für die Tragfeder 13 ist etwa ein Drittel der Länge des Querlenkers 5 von seinem äußeren Ende, also von dem hinteren Gelenk 8 an dem Radträger 1 entfernt angeordnet. Auch der linke hintere Stoßdämpfer, der mit der Tragfeder 13 eine Baueinheit bilden kann, stützt sich an dem hinteren Querlenker 5 ab, der sich seinerseits an seinem äußeren Ende an dem Radträger 1 und an seinem inneren Ende an der Schubstange 10 abstützt. Eine Radantriebswelle 18 dient dem Antrieb des Hinterrades 2.

Bei einem durch den hinteren Querlenker 5 bewirkten Schwenken des Radträgers 1 um die Lenkdrehachse 12, die durch die Mitten des vorderen Gelenkes 7 und des oberen Gelenkes 9 verläuft, ergibt sich eine Schrägstellung des Hinterrades 2 um den Lenkeinschlagwinkel alpha. Gleichzeitig ergibt sich eine Änderung des Sturzes des Hinterrades 2 um den Sturzänderungswinkel beta. Diese Verlagerung des Hinterrades 2 bewirkt einen raschen Aufbau einer Seitenkraft S, die einen Seitenversatz des Fahrzeugs zur Folge hat.

Wegen des bei der Hinterradlenkung nur geringen Lenkeinschlags sind nur geringe Verlagerungen des Querlenkers 5 erforderlich, so daß sich für die Vorwärtsfahrtrichtung auch die auf dem Querlenker 5 befindliche Abstützung der Tragfeder 13 beim Lenken nur geringfügig seitlich verlagert.

Das vordere Gelenk 7 und das obere Gelenk 9 sind zweckmäßigerweise so angeordnet, daß die Lenkdrehachse 12 derart verläuft, daß sich für die Vorwärtsfahrtrichtung ein Nachlauf für das Hinterrad 2 ergibt. Die Lenkdrehachse 12 muß nicht in einer sich in Fahrzeuglängsrichtung erstreckenden lotrechten Eben verlaufen, sie kann vielmehr auch in einer sich in Fahrzeuglängsrichtung erstreckenden geneigten Eben verlaufen, so daß für die Lenkdrehachse 12 in vorteilhafter Weise eine Spreizung gegeben ist.

Die vordere Lagerung des Längslenkers 3 ist derart ausgebildet, daß sie die Verlagerungen, die das vordere Ende des Längslenkers 3 bei den Schwenkbewegungen um die Lenkdrehachse 12 erfährt, zuläßt.

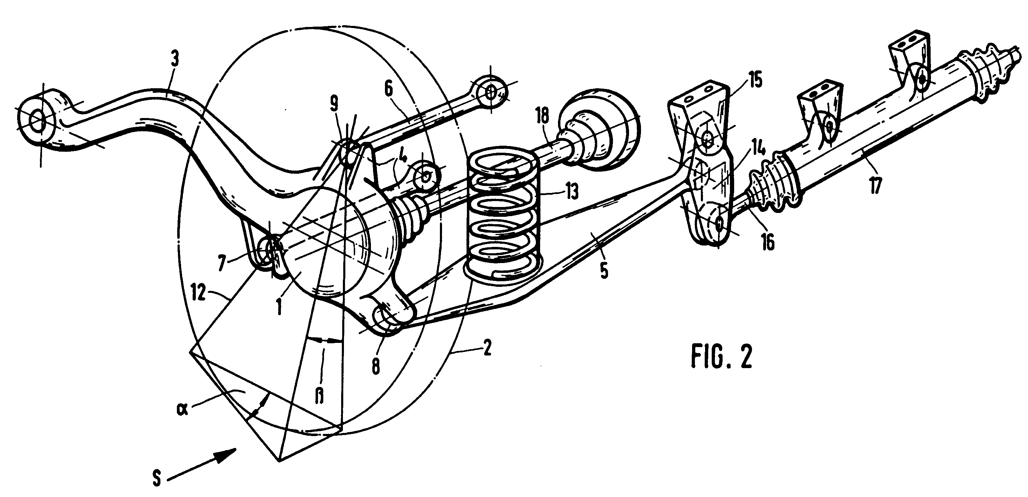

Die Radaufhängung nach Fig. 2 unterscheidet sich von der nach Fig. 1 dadurch, daß das innere Ende des in Fahrzeugquerrichtung verlagerbaren hinteren Querlenkers 5 nicht an einer Schubstange, sondern an einem Zwischenhebel 14 angelenkt ist. Dieser Zwischenhebel 14 ist um eine zumindest annähernd in Fahrzeuglängsrichtung verlaufende Schwenkachse schwenkbar über ein Zwischenstück 15 an dem nicht dargestellten Fahrschemel gelagert. Außerdem ist der Zwischenhebel 14 mit einer Schubstange 16 eines Stellmotors 17 verbunden. Bei dieser Ausbildung ist die Schubstange anders als die bei der Ausbildung nach Fig. 1 nicht durch die Stützkräfte der Tragfeder 13 belastet.

In Abweichung von den dargestellten Ausführungsbeispielen können die Querlenker in der Weise angeordnet sein, daß sich zwei der drei Gelenke oberhalb und das dritte Gelenk unterhalb der Radmitte befinden. Dieses untere Gelenk ist dabei derart angeordnet, daß es in lotrechter Projektion zwischen den beiden oberen Gelenken angeordnet ist. Bei dieser Anordnung wird die Lenkdrehachse durch die an dem Radträger befindlichen Gelenke des hinteren oberen Lenkers und des unteren Lenkers definiert. Der vordere obere Lenker dient dem Lenken und dem Abstützen der Tragfeder. Die nach Fig. 1 und Fig. 2 vorgesehene Anordnung bietet jedoch den Vorteil einer besonders wenig Bauraum beanspruchenden Ausbildung.

Statt an einem Fahrschemel können die Querlenker unmittelbar an dem Fahrzeugaufbau gelagert sein. Außerdem ist es möglich, den Längslenker zweiteilig auszubilden und die beiden Lenkerteile durch ein Querbewegungen zulassendes Scharniergelenk mit im wesentlichen parallel zu der Lenkdrehachse verlaufender Achse schwenkbar miteinander zu verbinden. Darüber hinaus ist es ferner möglich, die Längsschwinge in Querrichtung biegbar auszubilden.

Die Tragfeder kann wie bei den Ausführungsbeispielen dargestellt als Schraubenfeder ausgebildet sein. Es können jedoch auch andere Federarten eingesetzt werden. Beispielsweise kann die Tragfeder als Luftfeder ausgebildet sein.

Die rechte Radaufhängung ist zu der vorstehend erläuterten linken Radaufhängung symmetrisch ausgebildet. Eine einfache Ausbildung ergibt sich, wenn eine gemeinsame Schubstange für die beiden auf der linken bzw. rechten Fahrzeugseite vorgesehenen in Fahrzeugquerrichtung verlagerbaren Querlenker vorgesehen ist.

## Patentansprüche

1. Radaufhängung für lenkbare Hinterräder (2) von mit Vorderradlenkung ausgestatten Kraftfahrzeugen, insbesondere Personenkraftwagen, mit jeweils einem Radträger (1) für jedes Hinterrad (2), der über einen sich zumindest annähernd in Fahrzeuglängsrichtung erstreckenden Längslenker (3) und zwei sich wenigstens annähernd in Fahrzeugquerrichtung erstreckende Querlenker (4,6) mit dem Fahrzeugaufbau od. dgl. um eine Lenkdrehachse (12) schwenkbar verbunden ist, die von den radträgerseitigen Gelenken (7,9) der beiden Querlenker (4,6) definiert und in Seitenansicht gegenüber der Senkrechten geneigt angeordnet ist,
**dadurch gekennzeichnet,**
daß ein dritter Querlenke (5) an dem Radträger (1) angelenkt und zum Lenken durch einen Stellmotor (11,17) in Fahrzeugquerrichtung verlagerbar ist und daß die Neigung der Lenkdrehachse (12) derart ist, daß diese nach hinten zu ansteigt.

2. Radaufhängung nach Anspruch 1, dadurch gekennzeichnet, daß die Lenkdrehachse (12) derart angeordnet ist, daß für die Vorwärtsfahrtrichtung ein Nachlauf des Hinterrades (2) gegeben ist.

3. Radaufhängung nach Anspruch 1 oder 2, dadurch gekennzeichnet, daß an dem Radträger (1) drei Querlenker (4, 5, 6) angelenkt sind, für die Gelenke (7, 8, 9) der Querlenker (4, 5, 6) an dem Radträger (1) eine Dreiecksanordnung vorgesehen ist, bei der sich entweder zwei Gelenke unterhalb und das dritte Gelenk oberhalb oder zwei Gelenke oberhalb und das dritte Gelenk unterhalb der Radmitte befinden und das jeweils dritte Gelenk in lotrechter Projektion zwischen den beiden anderen Gelenken angeordnet ist, und die beiden Gelenke (7, 9) der in Fahrzeugquerrichtung fixierten Querlenker (4, 6) an dem Radträger (1) die Lenkdrehachse (12) definieren.

4. Radaufhängung nach Anspruch 3, dadurch gekennzeichnet, daß die drei Querlenker (4, 5, 6) an einem gemeinsamen Fahrschemel angelenkt sind und der Längslenker (3) unmittelbar an dem Fahrzeugaufbau angelenkt ist.

5. Radaufhängung nach Anspruch 3 oder 4, dadurch gekennzeichnet, daß der Radträger (1) mit dem Längslenker (3) starr verbunden ist und die Lagerung an dem freien Ende des Längslenkers (3) derart ausgebildet ist, daß sie dem Lenkeinschlag entsprechende Verlagerungen des freien Endes des Längslenkers (3) in Fahrzeugquerrichtung und in Höhenrichtung zuläßt.

6. Radaufhängung nach Anspruch 5, dadurch gekennzeichnet, daß Radträger (1) und Längslenker (3) einstückig ausgebildet sind.

7. Radaufhängung nach Anspruch 3 oder 4, dadurch gekennzeichnet, daß der Längslenker einen an den Radträger anschließenden und einen radträgerfernen Teil aufweist, der an den Radträger anschließende Teil des Längslenkers mit dem Radträger starr verbunden, vorzugsweise mit diesem einstückig ausgebildet ist und die beiden Teile des Längslenkers durch ein Scharniergelenk mit im wesentlichen parallel zu der Lenkdrehachse (12) verlaufender Achse schwenkbar miteinander verbunden sind.

8. Radaufhängung nach Anspruch 3 oder 4, dadurch gekennzeichnet, daß der Radträger mit dem Längslenker um die Lenkdrehachse (12) schwenkbar verbunden ist.

9. Radaufhängung nach Anspruch 3 oder 4, dadurch gekennzeichnet, daß der Längslenker in Querrichtung biegbar ausgebildet ist.

10. Radaufhängung nach einem der Ansprüche 3 bis 9, dadurch gekennzeichnet, daß der in Fahrzeugquerrichtung verlagerbare Querlenker (5) eine der den Fahrzeugaufbau tragenden Tragfedern (13) abstützt.

11. Radaufhängung nach einem der Ansprüche 1 bis 10, dadurch gekennzeichnet, daß der in Fahrzeugquerrichtung verlagerbare Querlenker (5) mit seinem inneren Ende an einer Schubstange (10) unmittelbar angelenkt ist, die mit dem Stellmotor (11) in Wirkverbindung steht.

12. Radaufhängung nach Anspruch 11, dadurch gekennzeichnet, daß die in Fahrzeugquerrichtung verlagerbaren Querlenker (5) beider Fahrzeugseiten mit einer gemeinsamen Schubstange (10( verbunden sind.

13. Radaufhängung nach einem der Ansprüche 1 bis 10, dadurch gekennzeichnet, daß der in Fahrzeugquerrichtung verlagerbare Querlenker (5) mit seinem inneren Ende an einem Zwischenhebel (14) angelenkt ist, der um eine zumindest annähernd in Fahrzeuglängsrichtung verlaufende Schwenkachse schwenkbar an dem Fahrzeugaufbau od. dgl. gelagert und mit dem Stellmotor (17) verbunden ist.

## Claims

1. A suspension for steerable rear wheels (2) of motor vehicles, more especially passenger cars, equipped with front wheel steering, and comprising at least one wheel carrier (1) for each rear wheel (2) and pivotably connected around a steering axis (12) to the vehicle body or the like by a longitudinal link (3) extending at least approximately in the longitudinal direction of the vehicle and two transverse links (4, 6) extending at least approximately in the transverse direction of the vehicle, the steering axis being defined by the joints (7, 9) of the two transverse links (4, 6) on the wheel carrier side and being disposed at an angle to the vertical in side view, characterised in that a third transverse link (5) is pivoted to the wheel carrier (1) and for the purpose of steering is movable by a servomotor (11, 17) in the transverse direction of the vehicle, and the slope of the steering axis (12) is such that it rises to the rear.

2. A wheel suspension according to claim 1, characterised in that the steering axis (12) is disposed so as to provide a caster of the rear wheel (2) in the forward direction of travel.

3. A wheel suspension according to claim 1 or 2, characterised in that three transverse links (4, 5, 6) are pivoted to the wheel carrier (1), and the joints (7, 8, 9) between the transverse links (4, 5, 6) and the wheel carrier (1) are arranged in a triangle in which either two joints are below and the third joint is above or two joints are above and the third joint is below the centre of the wheel and the respective third joint, in vertical projection, is disposed between the other two joints, and the steering axis (12) is defined by the two joints (7, 9) between the wheel carrier (1) and the transverse links (4, 6) fixed in the transverse direction of the vehicle.

4. A wheel suspension according to claim 3, characterised in that the three transverse links (4, 5, 6) are pivoted to a common sub-frame and the longitudinal link (3) is pivoted to the vehicle frame directly.

5. A wheel suspension according to claim 3 or 4, characterised in that the wheel carrier (1) is rigidly connected to the longitudinal links (3) and the free end of the longitudinal link (3) is mounted so that it can move in the transverse direction of the vehicle and in the vertical direction as required by the steering lock.

6. A wheel suspension according to claim 5, characterised in that the wheel carrier (1) and the longitudinal link (3) are in one piece.

7. A wheel suspension according to claim 3 or 4, characterised in that the longitudinal link has a part adjacent the wheel carrier and a part remote from the wheel carrier, the part of the longitudinal link adjacent the wheel carrier being rigidly connected to the wheel carrier and preferably in one piece therewith, and the two parts of the longitudinal link being pivotably interconnected by a hinge joint having its axis extending substantially parallel to the steering axis (12).

8. A wheel suspension according to claim 3 or 4, characterised in that the wheel carrier is connected to the longitudinal link so as to be pivotable around the steering axis (12).

9. A wheel suspension according to claim 3 or 4, characterised in that the longitudinal link is made flexible in the transverse direction.

10. A wheel suspension according to any of claims 3 to 9, characterised in that the transverse link (5) movable in the transverse direction of the vehicle supports suspension springs (13) which carry the vehicle body.

11. A wheel suspension according to any of claims 1 to 10, characterised in that the inner end of the transverse link (5) movable in the transverse direction of the vehicle is directly pivoted to a push rod (10) in operative connection with the servomotor (11).

12. A wheel suspension according to claim 11, characterised in that, on the two sides of the vehicle, the transverse links (5) movable in the transverse direction of the vehicle are connected by a common push rod (10).

13. A wheel suspension according to any of claims 1 to 10, characterised in that the inner end of the transverse link (5) movable in the transverse direction of the vehicle is pivoted to an intermediate lever (14) which is connected to the servomotor (17) and mounted on the vehicle body or the like so as to be pivotable around an axis which extends at least approximately in the longitudinal direction of the vehicle.

## Revendications

1. Suspension de roue pour roues arrière dirigeables (2) de véhicule automobile équipé de direction avant, notamment de véhicule de tourisme, avec chaque fois un support de roue (1) pour chaque roue arrière (2), qui est relié au châssis du véhicule ou analogue de façon articulée autour d'un axe de rotation de braquage (12) par l'intermédiaire d'un bras longitudinal (3) s'étendant au moins approximativement dans le sens longitudinal du véhicule et de deux leviers transversaux (4, 6) s'étendant au moins approximativement dans le sens transversal du véhicule, axe qui est défini par les articulations (7, 9) du côté support de roue des deux bras transversaux (4, 6) et qui, en vue de côté, est incliné par rapport à la verticale, caractérisé en ce qu'un troisième levier transversal (15) est articulé sur le support de roue (1) et peut être déplacé pour la direction grâce à un moteur de réglage (11, 17) en sens transversal au véhicule et que l'inclinaison de l'axe de rotation de braquage (12) est tel que celui-ci monte vers l'arrière.

2. Suspension de roue selon la revendication 1, caractérisée en ce que l'axe de rotation de braquage (12) est disposé de telle façon que pour la marche avant il existe une chasse de la roue arrière (2).

3. Suspension selon la revendication 1 ou 2, caractérisée en ce que, sur le support de roue (1), trois leviers transversaux sont articulés (4, 5, 6), qu'on prévoit pour les articulations (7, 8, 9) des leviers transversaux (4, 5, 6) sur le support de roue (1), une implantation en triangle dans laquelle, soit deux articulations se trouvent au-dessous du moyeu de la roue et la troisième au-dessus du moyeu de la roue, soit deux articulations sont au-dessus et la troisième articulation est en-dessous du milieu de la roue et toujours la troisième articulation en projection verticale se trouve entre les deux autres articulations, et les deux articulations (7, 9) des leviers transversaux (4, 6) fixés en sens transversal du véhicule sur le support de roue (1) définissent l'axe de rotation de braquage (12).

4. Suspension de roue selon la revendication 3, caractérisée en ce que les trois leviers transversaux (4, 5, 6) sont articulés sur une traverse commune et le bras transversal (3) est articulé sur le châssis du véhicule.

5. Suspension de roue selon la revendication 3 ou 4, caractérisée en ce que le support de roue (1) est lié rigidement au bras longitudinal (3) et que le logement à l'extrémité libre du bras longitudinal (3) est constitué de telle façon que le braquage permette des déplacements appropriés de l'extrémité libre du bras longitudinal (3) dans le sens transversal du véhicule et vers le haut.

6. Suspension de roue selon la revendication 5, caractérisée en ce que le support de roue (1) et le bras longitudinal (3) sont d'une pièce.

7. Suspension de roue selon la revendication 3 ou 4, caractérisée en ce que le bras longitudinal présente une pièce raccordée au support de roue et une pièce éloignée du support de roue, la pièce de bras longitudinal raccordée au support de roue est fixée rigidement au support de roue, de préférence elle ne forme qu'une pièce avec lui et les deux pièces du bras longitudinal sont reliées par une articulation à charnière avec un axe essentiellement parallèle à l'axe de rotation de braquage (12).

8. Suspension de roue selon la revendication 3 ou 4, caractérisée en ce que le support de roue est relié en pivotement avec le bras longitudinal autour de l'axe de rotation de braquage.

9. Suspension de roue selon la revendication 3 ou 4, caractérisée en ce que le bras longitudinal est constitué de façon à pouvoir être flexible en sens transversal.

10. Suspension de roue selon l'une des revendications 3 à 9, caractérisée en ce que le levier transversal déplaçable en sens transversal par rapport au véhicule (5) supporte l'un des ressorts porteurs (13) du châssis du véhicule.

11. Suspension de roue selon l'une des revendications 1 à 10, caractérisée en ce que le levier transversal déplaçable en sens transversal (5) par rapport au véhicule est directement articulé avec son extrémité interne sur une jambe de force qui coopère avec le moteur de réglage (11).

12. Suspension de roue selon la revendication 11, caractérisée en ce que les leviers transversaux (15) déplaçables en sens transversal par rapport au véhicule de chaque côté du véhicule, sont reliés à une jambe de force commune (10).

13. Suspension de roue selon l'une des revendications 1 à 10, caractérisée en ce que le levier transversal (5) déplaçable en sens transversal par rapport au véhicule est articulé par son extrémité interne sur levier intermédiaire (14) qui est logé en pivotement sur le châssis du véhicule ou analogue selon un axe de pivotement s'étendant au moins presque dans le sens longitudinal du véhicule et est relié au moteur de réglage (17).
